# EUROPEAN PATENT SPECIFICATION

(11) **EP 2 646 681 B1**
(45) Date of publication and mention of the grant of the patent: **24.10.2018**
(21) Application number: 11797153.1
(22) Date of filing: 30.11.2011
(51) Int. Cl.: F03B 17/02, F03B 17/04, F03B 13/08

(54) **MULTIPURPOSE PLANT**
MULTIFUNKTIONSANLAGE
USINE POLYVALENTE

(30) Priority: 03.12.2010 IT BO20100720
(43) Date of publication of application: 09.10.2013
(73) Proprietor: Tor - H2 S.r.l., 40068 San Lazzaro di Savena (IT)
(72) Inventor: COLLIVA, Cesare, 40068 San Lazzaro di Savena (IT)
(74) Representative: Milli, Simone
(86) International application number: PCT/IB2011/055374
(87) International publication number: WO 2012/073195

(56) References cited:
- WO-A1-2004/094816
- WO-A1-2009/118572
- WO-A2-2008/068760
- DE-A1- 10 123 240
- US-A1- 2003 168 864
- US-A1- 2010 244 450

## Description

### Technical Field

This invention relates to a multipurpose plant designed to allow the generation of electricity and of products obtained from salt water which are important to industry, in particular hydrogen, oxygen, salt and fresh water.

### Background Art

There are prior art plants designed to allow the production of electricity.

Such plants comprise an artificial reservoir, forming a reservoir delimited by masonry (or by a dam).

Such plants comprise an electricity generating station, comprising one or more hydroelectric turbines (equipped with related alternators).

The hydroelectric turbines are designed in such a way that their rotation is driven by the water taken from the reservoir by means of a pipe.

In other words, the potential energy of the water from the reservoir is converted into kinetic energy and by causing rotation of the alternators - turbines is converted into electricity.

A particular type of such plants, called reversible, comprises a temporary storage tank for the water which is made to pass through the turbines.

Said tank is usually positioned lower than the bottom of the reservoir and in any case lower than the surface of the water in the reservoir.

That type of plant comprises one or more pumping units, connected to the temporary tank and designed for pumping the water from the temporary storage tank to the reservoir.

Therefore, in accordance with economical criteria, the water is drawn from the reservoir to be sent to the turbines during the hours in which the energy has higher a cost per unit (kWh) (normally in the daytime) and pumped from the temporary storage tank to the reservoir during the hours in which the energy has a lower cost per unit (kWh).

In other words, such plants operate substantially in a closed cycle between the storage tank and the reservoir (generating electricity/pumping at different times) and allow an overall benefit to be gained in economic terms.

There is a strongly-felt need, in particular in areas of the world where urbanisation has not taken hold, to be able to generate products of salt water which are of particular importance (for example, fresh water, salt, etc.) and at the same time to allow the generation of electricity according to the methods described above.

Until now there have been prior art plants which are highly specialised in the production of one type of product.

A first problem linked to such plants is that, in general, since each plant is designed with logics for optimising production of the specific product, any byproducts of its production are discarded or in any case are not properly used.

Moreover, such plants, individually, require large surface areas in plan view and, in light of that, the production of a plurality of products derived from the water in a predetermined area has a significant environmental impact in terms of the ground occupied by such plants.

Patent documents US2010/0244450A1, DE10123240 and WO2009/118572 describe examples of apparatuses for producing energy from hydroelectric and solar sources.

Such plants are specially designed to produce energy and recirculate water between two tanks, one lower and one upper.

Such plants are specially dedicated to and designed for producing electricity.

### Disclosure of the Invention

The aim of this invention is therefore to meet the above-mentioned need by overcoming the afore-mentioned disadvantages, that is to say, to propose a multipurpose plant for generating electricity and making available products obtained from salt water which are of particular importance, salt and fresh water.

Another aim of this invention is to propose a multipurpose plant for making available products obtained from salt water, such as salt, fresh water, hydrogen and oxygen, at the same time allowing energy to be generated.

According to the invention, this aim is achieved by a multipurpose plant comprising the technical characteristics described in one or more of the appended claims.

### Brief Description of the Drawings

The technical features of the invention, with reference to the above aims, are clearly described in the claims below and its advantages are more apparent from the detailed description which follows, with reference to the accompanying drawings which illustrate a preferred non-limiting example embodiment of the invention and in which:
- Figure 1 is a block diagram of the multipurpose plant according to this invention;
- Figure 2 is a schematic cross-section of the plant of Figure 1;
- Figure 3 is a schematic plan view of the plant of Figure 1.

### Detailed Description of the Preferred Embodiments of the Invention

With reference to the accompanying drawings, the numeral 1 denotes the plant in accordance with this invention.

It should be noticed that the plant 1 is a multipurpose plant, since it allows electricity to be made available, generated from renewable sources and, in addition, it allows products to be obtained from salt water AS (in particular, but not limited to, salt S, fresh water A, oxygen O2 and hydrogen H2).

The following is a description of a preferred embodiment of the plant 1. It should be noticed that said example must be considered to be provided by way of example only.

In fact, the same plant 1 may be designed and modified according to specific requirements, as becomes clear in the description below.

According to the invention, the plant 1 comprises a first, upper containment tank 2 for salt water AS, hereinafter also referred to as the first tank 2 or upper tank 2.

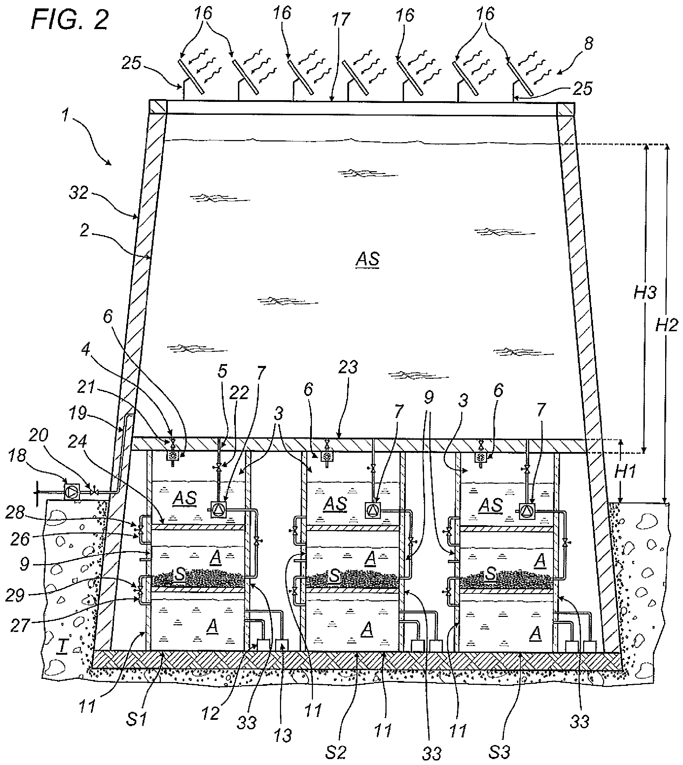

It should be noticed that, according to Figure 2, the bottom of the first tank 2 is positioned at a first height H1 relative to the ground T, whilst the surface PL1 of the salt water AS is positioned at a higher second height H2.

Preferably, the distance between the second height H2 and the first height H1 is greater than 60 m. Even more preferably, the difference is greater than 80 m.

It should be noticed that, preferably, according to a plan view, the first tank 2 has a substantially rectangular shape. However, that does not limit the scope of the invention in any way, since the first tank 2 may have a different shape.

Preferably, the size of the larger side 30 of the rectangle formed by the first tank 2 in plan view is approximately 500 m and the size of the smaller side 31 of the same rectangle is approximately 200 m. It should be noticed that such dimensions shall not be understood as limiting the invention.

Preferably, the plant 1 comprises a pipe 19 and a filling pump 18 for the first tank 2 which is operatively positioned along the pipe 19.

The pipe 19 is designed to put the first tank 2 in fluid connection with a source of salt water AS (where the source is provided with a volume of salt water AS much greater than that of the first tank 2), for example it is put in connection with the sea or the ocean.

The filling pump 18, acting on the pipe 19, allows salt water AS to be transferred from the source of salt water AS to the first tank 2 (in light of this, it provides the head needed to allow the transfer of fluid from the source of salt water to the first tank 2) in such a way as to fill (even partly) the first tank 2.

It should be noticed that, preferably, the pipe 19 is provided with means 20 for closing the pipe 19, for preventing the salt water AS from flowing out of the first tank 2 when the filling pump 18 is not operating.

According to the preferred embodiment, said closing means 20 comprise a gate valve able to move inside the pipe 19 for allowing closure of the pipe 20. The gate valve can preferably be remotely controlled.

According to the invention, the plant 1 further comprises a second, lower temporary storage tank 3 for the salt water AS, hereinafter also referred to as the second tank 3 or lower tank 3.

The second tank 3 can be put in connection with the first tank by means of a first pipe 4 and a second pipe 5.

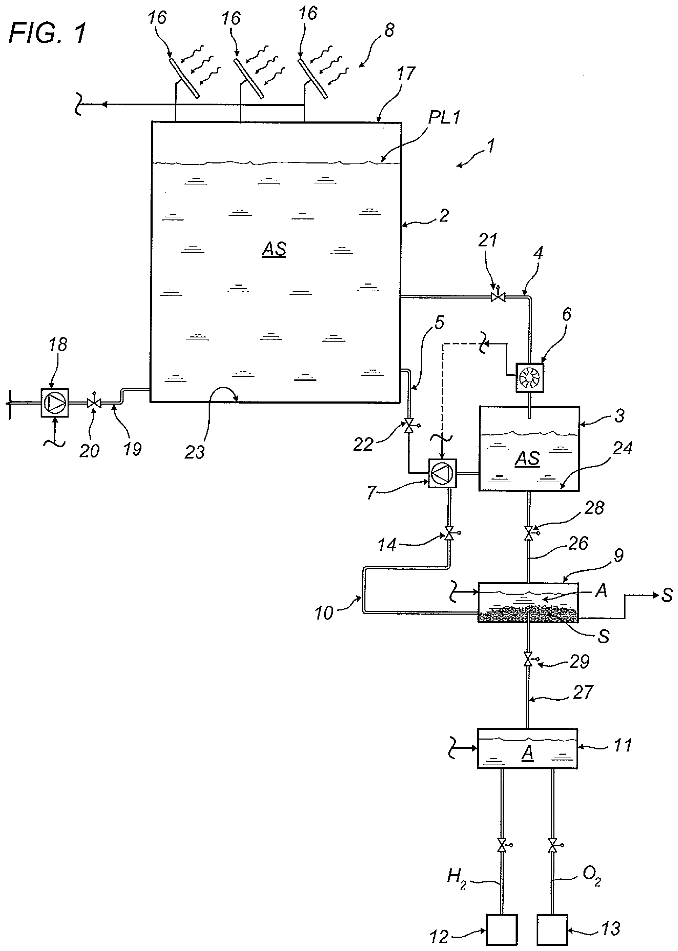

It should be noticed that the second tank 3 is positioned, relative to the first tank 2, in such a way that the bottom 24 of the second tank 3 is lower than the zone where the first pipe 4 is connected to the first tank 2 (in Figure 1 that zone is defined at the bottom 23 of the first tank 2).

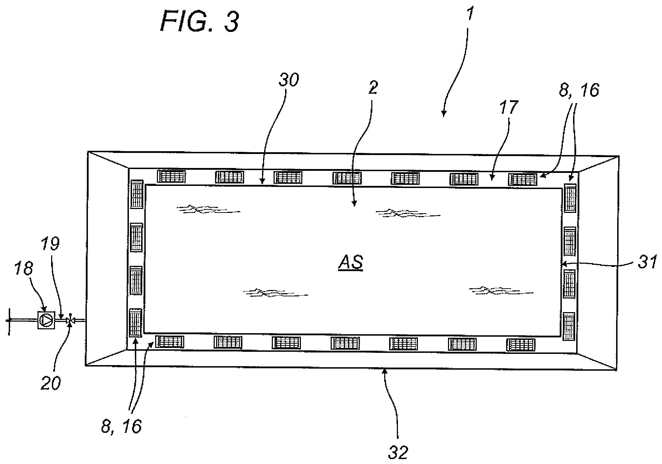

Therefore, according to the example illustrated in Figure 3, which shall not be considered limiting, the volume formed by the second tank 3 is positioned below the volume formed by the first tank 2.

According to the invention, the plant 1 comprises a plurality of hydroelectric turbines 6 (or even just one), which act along the first pipe 4 (it should be noticed that the plant may comprise any number of hydroelectric turbines 6, even just one, depending on the maximum electricity which can be generated).

It should be noticed that having a plurality of hydroelectric turbines 6 advantageously allows the plant to be kept operating 24 hours a day.

In fact, in shifts, some turbines 6 may be stopped for maintenance (for example, every six hours), whilst others can remain operational.

The first pipe 4 is equipped with closing means 21 which can be activated to allow closing of the first pipe 4 and to prevent salt water AS from circulating along the first pipe 4.

It should be noticed that, preferably, the closing means 21 comprise a gate valve.

Said gate valve can preferably be operated by means of related drivers which can be remotely controlled.

The hydroelectric turbine 6 is activated by the salt water AS flowing from the first tank 2 towards the second tank 3 along the first pipe 4 and coverts the kinetic energy of the salt water AS in transit along the first pipe 4 into electricity.

It should be noticed that, in this description, the term "hydroelectric turbine" refers to a unit comprising a turbine and an electric generator, which are designed to convert the kinetic energy of the water flow into electricity.

It should be noticed that, advantageously, the density of salt water AS is greater than that of fresh water, therefore, the gross head H3 between the hydroelectric turbine 6 and the surface of the water AS in the first tank 2 being equal, and the volume of water drawn from the first tank 2 being equal, salt water allows the turbine 6 to obtain more energy than what could be obtained from fresh water.

The plant 1 according to the invention also comprises a pumping unit 7, acting along the second pipe 5.

In light of this, it should be noticed that the second pipe 5 is equipped with related closing means 22 which can be activated for closing the second pipe 5 and to prevent salt water AS from circulating along the second pipe 5. The closing means 22 therefore advantageously prevent any reflux of salt water AS from the first tank 2 towards the second tank 3.

The pumping unit 7 can be activated, simultaneously with opening of the second pipe 5, transferring the salt water AS from the second tank 3 to the first tank 2.

According to the invention, the plant 1 also comprises a photovoltaic apparatus 8 designed to convert solar radiant energy into electricity.

It should be noticed that, preferably the photovoltaic apparatus 8 comprises a plurality of photovoltaic modules 16 which are able to move according to the position of the sun (so as to maximise the radiant power they receive).

Preferably, the photovoltaic modules 16 are associated with the first tank 2.

Moreover, according to a preferred embodiment, the photovoltaic modules 16 are positioned on top of the first tank 2, even more preferably they are positioned along an upper outer edge 17 delimiting the first tank 2.

Each photovoltaic module 16 is supported by a supporting pole 25 connected to the first tank 2.

Preferably, the supporting pole 25 is articulated relative to the first tank 2 to allow the photovoltaic module 16 to move depending on the position of the sun or, according to an embodiment not illustrated, the supporting pole 25 is rigidly fixed to the first tank 2 and the photovoltaic module 16 is articulated relative to the supporting pole 25 to allow said movement.

According to another aspect, the photovoltaic modules 16 are supported directly by a honeycomb frame which allows optimisation of heat removal.

Preferably, the photovoltaic modules 16 are thin film photovoltaic modules.

It should be noticed that, advantageously, the photovoltaic modules 16 allow the generation of significant electricity during the hours when the sun is actually shining on them.

According to the invention, the plant 1 comprises a desalination apparatus 9, designed to make available from the salt water AS, salt S and fresh water A (that is to say, for separating from the salt water AS its main components, salt and water).

It should be noticed that the desalination apparatus 9 comprises a container in which, according to a plurality of known techniques, salt and fresh water are separated from the salt water AS introduced into the container (that is to say, salt water AS desalination takes place).

The desalination apparatus 9 is designed to be put in fluid connection with the second tank 3.

In fact, it should be noticed that, as illustrated in Figure 1, the plant 1 comprises a pipe 26 connecting the second tank 3 to the desalination apparatus 9, allowing the transfer of salt water AS from the second tank 3 to the desalination apparatus 9.

Preferably, the connecting pipe 26 is equipped with closing means 28 which allow closure of the pipe 26, preventing the transfer of salt water AS from the second tank 3 to the desalination apparatus 9.

The products made available by the desalination apparatus 9 are fresh water A (that is to say, containing no salt) and salt S.

It should be noticed that the salt S is a product of significant importance not just to the food industry but also to the metalliferous, pharmaceutical and chemical industry, as well as for use as a water softener for purifiers and as a component for batteries.

Fresh water A is a product of significant importance for a plurality of uses, in particular for the water requirements of the population.

Therefore, advantageously, the desalination apparatus 9 allows two very important products to be made available: fresh water and salt.

It should be noticed that the desalination apparatus 9 requires power in order to run. That electricity is supplied by the hydroelectric turbine or by the photovoltaic apparatus 8.

According to the invention, the plant 1 comprises an apparatus 11 for performing electrolysis, hereinafter also referred to as the electrolysis apparatus 11.

Electrolysis is a process in which, due to the circulation of an electric current in a volume of water, the oxygen and hydrogen atoms of which the water molecule consists are separated and pass from a diatomic structure (H2O) to a monatomic structure (H2 and O2).

Therefore, the electrolysis apparatus 11 makes available oxygen O2 and hydrogen H2 by separating the water molecule H2O.

Preferably, the electrolysis apparatus 11 is designed to be put in fluid connection with the desalination apparatus 9. According to that aspect, the electrolysis apparatus 11 is designed to receive fresh water A from the desalination apparatus 9.

In light of that, it should be noticed that according to the embodiment in Figure 1, the electrolysis apparatus 11 is put in fluid connection with the desalination apparatus 9 by means of a connecting pipe 27, which is also part of the plant 1.

Preferably, the pipe 27 is also equipped with related closing means 29.

It should be noticed that the electrolysis apparatus 11 requires power in order to run. That electricity is supplied by the hydroelectric turbine and/or by the photovoltaic apparatus 8.

It should also be noticed that the oxygen O2 made available by the electrolysis apparatus 11 is stored in a related oxygen tank 12, which is also part of the invention, whilst the hydrogen H2 made available by the electrolysis apparatus 11 is stored in a related hydrogen tank 13.

It should be noticed that, according to an embodiment not illustrated, the electrolysis apparatus 11 is designed to be put in connection with the second tank 3. In accordance with that embodiment, the electrolysis apparatus 11 performs electrolysis on the salt water AS.

The following is a description of a preferred embodiment for application of the plant layout described above, illustrated in Figures 2 and 3.

It should be noticed that the first tank, the second tank, the desalination apparatus 9 and the electrolysis apparatus 11 are, advantageously and according to the invention, integrated in the same tower structure 32.

The tower structure 32 is preferably a masonry structure.

The structure 32 extends vertically, its height preferably being approximately 120 to 130 m.

It should also be noticed that the tower structure 32 is at least partly buried, that is to say, a first portion projects above the ground T and a second portion is lower than ground level T. That gives the structure 32 greater stability.

It should be noticed in particular that, according to a preferred embodiment, the second tank 3, the desalination apparatus 9, the electrolysis apparatus 11 are supported by a vertical framework 33 positioned inside the tower 32.

It should also be noticed that, advantageously, the second tank 3, the desalination apparatus 9, the electrolysis apparatus 11 are positioned in the vertical framework 33 in such a way that they are vertically stacked at different heights in the following order from top to bottom: second tank 3, desalination apparatus 9, electrolysis apparatus 11.

According to another aspect, the tower structure 32 comprises one or more elevators designed to allow the vertical movement of persons and goods along the structure 32.

The following is a description of a preferred embodiment of the plant 1 described above.

It shall be understood that this example does not limit the scope of the invention, since it is possible to make the plant operate according to a plurality of different operating logics, as explained in more detail below, depending on the actual plant configuration and on requirements.

The transfer of water along the first pipe from the first tank 2 to the second tank 3 allows electricity to be generated by the hydroelectric turbine 6.

That electricity may be used to power the desalination apparatus 9 and/or the electrolysis apparatus 11, and/or it may be made available for other uses.

The salt water AS may be made to circulate between the first tank 2 and the second tank 3 by alternatively activating the pumping unit 7 or the hydroelectric turbine 6.

That allows electricity to be generated when the turbine 6 is active and, when the pumping unit 7 is active it allows the transfer of salt water from the second tank 3 to the first tank 2 (with methods similar to those described for prior art reversible plants).

In light of this, it should be noticed that the pumping unit 7 requires electricity in order to run, which is guaranteed by the solar source and/or by the turbine 6.

It should be noticed that the turbine 6 and the pumping unit 7 may also be activated simultaneously.

In that simultaneous activation situation for the turbine 6 and the pumping unit 7, the flow rate of water in transit along the first pipe 4 (for generating electricity in the turbine 6) is preferably lower than the flow rate of water in transit along the second pipe 5.

It should be noticed that, according to the above-mentioned operating method, there is partial recirculation of the salt water between the first tank 2 and the second tank 3. In fact, a portion of the salt water is transferred from the second tank 3 to the desalination apparatus 9.

It should be noticed that that part of the salt water AS present in the second tank 3 is transferred to the desalination apparatus 9 and, then after the salt has been extracted, to the electrolysis apparatus 11.

In light of this, it should therefore be noticed that the water from the first tank 2 consumed for generating hydrogen H2, salt S and oxygen O2 must be topped up in that tank.

Activation of the filling pump 18 allows said salt water AS top up in the first tank 2.

Advantageously, the filling pump 18 may be powered by electricity generated by the photovoltaic apparatus 8.

To summarise, the plant 1 allows energy to be generated by means of the hydroelectric turbine or turbines 6 and by means of the photovoltaic apparatus 8, and it also allows the generation of products from the salt water AS.

It should be noticed that the pumping unit 7 and the filling pump 18 require electricity in order to run, which can be supplied by the photovoltaic apparatus 8 and/or by the hydroelectric turbine or turbines and/or if said sources are faulty or not operational, even from the electric mains.

In particular, it should be noticed that the photovoltaic apparatus 8 and the hydroelectric turbines 6 allow the production of more electricity than is required for operation of the pumping unit, the electrolysis apparatus and the desalination apparatus.

Advantageously, the surplus electricity can be stored or released to an electricity network (for example made available to the population living near the plant).

It should be noticed that one advantage of this invention is that a plant 1 is provided which is designed to allow the generation of electricity, salt S, fresh water, hydrogen H2 and oxygen O2.

Said plant 1 can preferably be built close to coastal areas where a source of salt water AS is available.

It should also be noticed that advantageously in the example illustrated in Figure 1 the plant comprises a plurality of sub-modules, in particular a first sub-module S1 and a second sub-module S2.

Each sub-module S1 and S2 comprises a related second tank 2, a desalination apparatus 9 and an electrolysis apparatus 11.

Each sub-module S1 and S2 operates according to the methods described above.

Advantageously, the presence of a plurality of sub-modules S1 and S2 allows the production of energy/products from the water to be split amongst the various modules.

Advantageously, that allows maintenance work to be carried out on one or more components (for example, the second tank 2, the desalination apparatus 9, the electrolysis module 11) of one sub-module without the need for any stop in the production of oxygen, salt, fresh water and hydrogen.

Preferably and without limiting the scope of the invention, the plant 1 comprises a plurality of sub-modules (Figure 2 only shows three sub-modules S1, S2 and S3).

According to another aspect, the pumping unit 7 is put in fluid connection with the desalination apparatus 9 by means of a pipe 10.

It should be noticed that the pipe 10 is also preferably equipped with related closing means 14.

According to that aspect, advantageously the unit 7 may be activated for pumping the water A separated from the salt S by the desalination apparatus 9 towards the first tank 2.

It should be noticed that said plant is highly flexible and can be operated according to various operating logics.

It should also be noticed that the various modules/sub-modules which make up the plant interact with each other in synergy.

For example, the salt-free water, which was subjected to salt extraction by the desalination apparatus 9, may advantageously be fed to the module 11 for generating hydrogen or, alternatively, it may be sent to a public water system.

Moreover, the salt-free water taken from the desalination apparatus 9 may be sent to the hydrogen producing module 11.

Therefore, the plant is characterised by its extreme versatility.

The modules are connected in a cascade so that the product of one of the modules/apparatuses (energy, salt, fresh water) can meet the requirements of another of the modules/apparatuses.

The various components of the plant (upper and lower tanks, desalination apparatus, hydrogen producing module, and apparatus 8 for generating renewable energy) interact with each other and can be activated/deactivated to allow:
- i) the generation of electricity from salt water falling from the upper tank to the lower tank;
- ii) the generation of electricity from a solar source;
- iii) the extraction of salt from salt water;
- iv) the separation of drinking water from salt water;
- v) the generation of hydrogen (starting with the water produced in point iv) and, if necessary, oxygen.

Preferably, the plant comprises a control unit (not illustrated), designed to allow a user to control (activate/deactivate) the various elements of the plant (in particular to allow opening/closing of the first and second pipes, that is to say, control of the closing means, and to allow activation of the pumping unit and/or the desalination apparatus and/or the hydrogen producing module).

The control unit preferably comprises a computer and actuator means which are connected to the elements which are part of the plant 1 and which are subject to control so that they can be activated/deactivated, opened/closed.

It should be noticed that, through the control unit, the plant management operator can activate/deactivate the above-mentioned elements which make up the plant, depending on the actual requirements at the time.

Moreover, even more preferably, the control unit is designed to allow remote control of the plant.

Even more preferably, the control unit comprises one or more control programmes which can be selected by an operator for activating part (or all) of the elements which are part of the plant.

Said programmes simplify plant 1 management, since they allow the operator, by simply selecting the programme, to activate the plant components in the correct combination, avoiding a situation in which the operator may forget to activate one unit which is essential for operation of another (for example, the desalination apparatus 9 is upstream of the hydrogen producing module and said units must be activated practically simultaneously, unless a build up of fresh water between the two is provided).

Therefore, the plant controller can use the control unit to activate one or more modules/apparatuses depending on the actual requirements at the time (example: need for drinking water to be sent to the water mains).

In light of this, the plant 1 is highly versatile and is easily adapted to actual current requirements.

According to another aspect, the hydrogen producing module 11 is connected to a hydrogen distribution network, for sending hydrogen to said network.

It shall be understood that the invention described is susceptible of industrial application and may be modified and adapted in several ways without thereby departing from the scope of the invention as defined by the appended claims.

## Claims

1. A multipurpose plant (1) for generating electricity and making available products obtained from salt water (AS), comprising:
- a first, upper tank (2) for containing salt water (AS),
- a second, lower tank (3) for temporary storage of the salt water (AS),
- a first pipe (4) and a second pipe (5) provided with respective closing means (21, 22) and designed to put in fluid connection the first tank (2) and the second tank (3);
- at least one hydroelectric turbine (6), acting along the first pipe (4) and activated by the flow of water along the first pipe (4), for converting kinetic energy into electricity;
- at least one pumping unit (7), acting along the second pipe (5) and which can be activated for transferring the salt water (AS) from the second tank (3) to the first tank (2);
- a photovoltaic apparatus (8) designed to convert solar radiant energy into electricity;
- a desalination apparatus (9), designed to be put in fluid connection with the second tank (3) for receiving at least one portion of the salt water (AS) from the second tank (3) and for separating the salt water (AS) into salt (S) and water (A), thus making the salt and the water available, the first tank (2), the second tank (3), the desalination apparatus (9) and the photovoltaic apparatus (8) being housed in the same tower structure (32);
- an apparatus (11) for performing electrolysis, designed to be put in fluid connection with the desalination apparatus (9) for receiving the water (A) and performing the electrolysis of the water (A), separating the water (A) into hydrogen (H) and oxygen (O);
- a control unit, designed for allowing a plant (1) management operator to control activation/deactivation of the desalination apparatus (9), of the pumping unit (7), of the electrolysis apparatus (11) and to control opening/closing of the above-mentioned closing means (21, 22).

2. The multipurpose plant according to claim 1, **characterised in that** the pumping unit (7) is also connected to the desalination apparatus (9) and is designed to act on the water (A) separated from the salt (S) in such a way as to transfer the water (A) from the desalination apparatus (9) to the first tank (2).

3. The multipurpose plant according to claim 1, **characterised in that** the hydroelectric turbine (6) and the pumping unit (7) are designed to be activated simultaneously in such a way as to bring about at least partial recirculation of salt water between the first tank (2) and the second tank (3).

4. The multipurpose plant according to any of the foregoing claims, **characterised in that** the photovoltaic apparatus (8) is designed to power the pumping unit (7) and to supply electricity to the desalination apparatus (9) for the salt water (AS).

5. The multipurpose plant according to any of the foregoing claims, **characterised in that** the photovoltaic apparatus (8) comprises a plurality of photovoltaic modules (16) which are able to move according to the position of the sun.

6. The multipurpose plant according to claim 5, **characterised in that** the photovoltaic modules (16) are positioned along an upper outer edge (17) delimiting the first tank (2).

7. The multipurpose plant according to any of the foregoing claims, **characterised in that** it comprises a pipe (19) designed to put in fluid connection the first tank (2) and a source of salt water (AS), and also comprising a filling pump (18) acting along the pipe (19) for allowing the transfer of salt water (AS) from the source of salt water to the first tank (2).

8. The multipurpose plant according to claim 7, wherein the filling pump (18) is powered by energy from the photovoltaic apparatus (8).

## Patentansprüche

1. Multifunktionsanlage (1) zur Erzeugung von Elektrizität und Bereitstellung von Produkten gewonnen aus Salzwasser (AS), umfassend:
- einen ersten, oberen Tank (2) zur Aufnahme von Salzwasser (AS),
- einen zweiten, unteren Tank (3) zur Zwischenspeicherung von Salzwasser (AS),
- eine erste Leitung (4) und eine zweite Leitung (5), die mit entsprechenden Verschlussmitteln (21, 22) versehen sind und ausgelegt sind, den ersten Tank (2) und den zweiten Tank (3) in Fluidverbindung zu bringen;
- mindestens eine hydroelektrische Turbine (6), die entlang der ersten Leitung (4) wirkt und durch die Wasserströmung entlang der ersten Leitung (4) aktiviert wird, um kinetische Energie in Elektrizität umzuwandeln;
- mindestens eine Pumpeinheit (7), die entlang der zweiten Leitung (5) wirkt und die zur Übertragung des Salzwassers (AS) aus dem zweiten Tank (3) in den ersten Tank (2) aktivierbar ist;
- eine Photovoltaikvorrichtung (8), die ausgelegt ist, Sonnenstrahlenenergie in Elektrizität umzuwandeln;
- eine Entsalzungsvorrichtung (9), die ausgelegt ist, in Fluidverbindung mit dem zweiten Tank (3) gebracht zu werden, um mindestens einen Abschnitt des Salzwassers (AS) aus dem zweiten Tank (3) aufzunehmen und das Salzwasser (AS) in Salz (S) und Wasser (A) zu trennen, wodurch das Salz und das Wasser verfügbar werden, wobei der erste Tank (2), der zweite Tank (3), die Entsalzungsvorrichtung (9) und die Photovoltaikvorrichtung (8) in derselben Turmstruktur (32) untergebracht sind;
- eine Vorrichtung (11) zum Durchführen einer Elektrolyse, die ausgelegt ist, um in Fluidverbindung mit der Entsalzungsvorrichtung (9) gebracht zu werden, um das Wasser (A) aufzunehmen und die Elektrolyse des Wassers (A) durchzuführen, wobei das Wasser (A) in Wasserstoff (H) und Sauerstoff (0) getrennt wird;
- eine Steuereinheit, die ausgelegt ist, einem eine Anlage (1) verwaltenden Betreiber zu ermöglichen, die Aktivierung/Deaktivierung der Entsalzungsvorrichtung (9), der Pumpeneinheit (7), der Elektrolysevorrichtung (11) zu steuernund das Öffnen/Schließen der oben genannten Verschlussmittel (21, 22) zu steuern.

2. Multifunktionalsanlage nach Anspruch 1, **dadurch gekennzeichnet, dass** die Pumpeinheit (7) ebenfalls mit der Entsalzungsvorrichtung (9) verbunden ist und so ausgelegt ist, dass sie auf das vom Salz (S) getrennte Wasser (A) derart einwirkt, dass das Wasser (A) von der Entsalzungsvorrichtung (9) in den ersten Tank (2) übertragen wird.

3. Multifunktionalsanlage nach Anspruch 1, **dadurch gekennzeichnet, dass** die hydroelektrische Turbine (6) und die Pumpeneinheit (7) so ausgelegt sind, um gleichzeitig aktiviert zu werden, so dass eine zumindest teilweise Rückführung von Salzwasser zwischen dem ersten Tank (2) und dem zweiten Tank (3) erfolgt.

4. Multifunktionsanlage nach einem der vorhergehenden Ansprüche, **dadurch gekennzeichnet, dass** die Photovoltaikvorrichtung (8) zum Betreiben der Pumpeneinheit (7) und zur Versorgung der Entsalzungsvorrichtung (9) mit Elektrizität für das Salzwasser (AS) ausgelegt ist.

5. Multifunktionsanlage nach einem der vorhergehenden Ansprüche, **dadurch gekennzeichnet, dass** die Photovoltaikvorrichtung (8) eine Vielzahl an Photovoltaikmodulen (16) umfasst, die sich entsprechend dem Sonnenstand bewegen können.

6. Multifunktionsanlage nach Anspruch 5, **dadurch gekennzeichnet, dass** die Photovoltaikmodule (16) entlang einer den ersten Tank (2) begrenzenden oberen Außenkante (17) positioniert sind.

7. Multifunktionsanlage nach einem der vorhergehenden Ansprüche, **dadurch gekennzeichnet, dass** sie eine Leitung (19) umfasst, die ausgelegt ist, den ersten Tank (2) und eine Salzwasserquelle (AS) in Fluidverbindung zu bringen, sowie umfassend eine Füllpumpe (18), die entlang der Leitung (19) wirkt, um die Übertragung von Salzwasser (AS) von der Salzwasserquelle in den ersten Tank (2) zu ermöglichen.

8. Multifunktionsanlage nach Anspruch 7, wobei die Füllpumpe (18) mit Energie aus der Photovoltaikvorrichtung (8) betrieben wird.

## Revendications

1. Usine polyvalente (1) servant à produire de l'électricité et à mettre à disposition des produits obtenus à partir d'eau salée (AS), comprenant :
- un premier réservoir supérieur (2) destiné à contenir de l'eau salée (AS),
- un second réservoir inférieur (3) destiné au stockage temporaire de l'eau salée (AS),
- un premier conduit (4) et un second conduit (5) pourvus de moyens de fermeture (21, 22) respectifs et conçus pour mettre en raccordement fluidique le premier réservoir (2) et le second réservoir (3) ;
- au moins une turbine hydroélectrique (6), agissant le long du premier conduit (4) et activée par le débit d'eau le long du premier conduit (4), pour transformer l'énergie cinétique en électricité ;
- au moins une unité de pompage (7), agissant le long du second conduit (5) et pouvant être activée pour transférer l'eau salée (AS) du second réservoir (3) au premier réservoir (2) ;
- un appareil photovoltaïque (8) conçu pour transformer l'énergie de rayonnement solaire en électricité ;
- un appareil de désalinisation (9) conçu pour être mis en raccordement fluidique avec le second réservoir (3) pour recevoir au moins une partie de l'eau salée (AS) du second réservoir (3) et pour séparer l'eau salée (AS) en sel (S) et en eau (A), rendant ainsi disponible le sel et l'eau, le premier réservoir (2), le second réservoir (3), l'appareil de désalinisation (9) et l'appareil photovoltaïque (8) étant logés dans la même structure de tour (32) ;
- un appareil (11) servant à effectuer l'électrolyse, conçu pour être mis en raccordement fluidique avec l'appareil de désalinisation (9) pour recevoir l'eau (A) et effectuer l'électrolyse de l'eau (A), séparant l'eau (A) en hydrogène (H) et en oxygène (0) ;
- une unité de commande, conçue pour permettre à un opérateur de gestion de l'usine (1) de commander l'activation/la désactivation de l'appareil de désalinisation (9), de l'unité de pompage (7), de l'appareil d'électrolyse (11) et pour commander l'ouverture/la fermeture des moyens de fermeture (21, 22) susmentionnés.

2. Usine polyvalente selon la revendication 1, **caractérisée en ce que** l'unité de pompage (7) est aussi raccordée à l'appareil de désalinisation (9) et est conçue pour agir sur l'eau (A) séparée du sel (S) de manière à transférer l'eau (A) de l'appareil de désalinisation (9) au premier réservoir (2).

3. Usine polyvalente selon la revendication 1, **caractérisée en ce que** la turbine hydroélectrique (6) et l'unité de pompage (7) sont conçues pour être activées simultanément de manière à provoquer une recirculation au moins partielle de l'eau salée entre le premier réservoir (2) et le second réservoir (3).

4. Usine polyvalente selon l'une quelconque des revendications précédentes, **caractérisée en ce que** l'appareil photovoltaïque (8) est conçu pour alimenter l'unité de pompage (7) et fournir de l'électricité à l'appareil de désalinisation (9) pour l'eau salé (AS).

5. Usine polyvalente selon l'une quelconque des revendications précédentes, **caractérisée en ce que** l'appareil photovoltaïque (8) comprend une pluralité de modules photovoltaïques (16) pouvant se déplacer en fonction de la position du soleil.

6. Usine polyvalente selon la revendication 5, **caractérisée en ce que** les modules photovoltaïques (16) sont positionnés le long d'une bordure extérieure supérieure (17) délimitant le premier réservoir (2).

7. Usine polyvalente selon l'une quelconque des revendications précédentes, **caractérisée en ce qu'**elle comprend un conduit (19) conçu pour mettre en raccordement fluidique le premier réservoir (2) et une source d'eau salée (AS), et comprend aussi une pompe de remplissage (18) agissant le long du conduit (19) pour permettre le transfert de l'eau salée (AS) de la source d'eau salée au premier réservoir (2).

8. Usine polyvalente selon la revendication 7, dans laquelle la pompe de remplissage (18) est alimentée par l'énergie produite par l'appareil photovoltaïque (8).
